# EUROPÄISCHE PATENTSCHRIFT

(11) **EP 1 196 504 B1**
(45) Veröffentlichungstag und Bekanntmachung des Hinweises auf die Patenterteilung: **04.05.2005**
(21) Anmeldenummer: 00949257.0
(22) Anmeldetag: 05.07.2000
(51) Int. Cl.: C09D 7/00, B05B 15/12

(54) **VERFAHREN ZUR BEHANDLUNG DES UMLAUFWASSERS IN LACKIERKABINEN**
METHOD FOR TREATING CIRCULATING WATER IN PAINT BOOTHS
PROCEDE DE TRAITEMENT DE L'EAU DE CIRCULATION DANS DES CABINES DE MISE EN PEINTURE

(30) Priorität: 14.07.1999 DE 19932766
(43) Veröffentlichungstag der Anmeldung: 17.04.2002
(73) Patentinhaber: Henkel Kommanditgesellschaft auf Aktien, 40589 Düsseldorf (DE)
(72) Erfinder: SPEI, Brigitte, D-40589 Düsseldorf (DE); GEKE, Jürgen, D-40225 Düsseldorf (DE); REHM, Hans-Jörgen, D-40724 Hilden (DE); WICHELHAUS, Winfried, D-40822 Mettmann (DE)
(86) Internationale Anmeldenummer: PCT/EP2000/006291
(87) Internationale Veröffentlichungsnummer: WO 2001/005896

(56) Entgegenhaltungen:
- EP-A- 0 474 869
- EP-A- 0 590 897
- EP-A- 0 624 631
- WO-A-91/09666
- BE-A- 715 025
- FR-A- 2 223 438
- US-A- 5 198 143

## Beschreibung

Die Erfindung betrifft ein Verfahren zur Behandlung des Umlaufwassers in Lackierkabinen, insbesondere für Fahrzeuglackierungen. Dabei werden die aus der Abluft ausgewaschenen und in das Umlaufwasser eingetragenen Lackpartikel in feindispergierter Form in der Schwebe gehalten und kontinuierlich oder diskontinuierlich aus dem Umlaufwasser entfernt. Dies gelingt durch Zugabe geeigneter Additive zum Umlaufwasser, deren Konzentration im Umlaufwasser auf die relativ geringen Werte zwischen 0,01 und 2,0 Gew.-% bezogen auf das Umlaufwasser eingestellt wird.

In Lackierkabinen, in denen Wasser- oder Lösungsmittellacke auf die zu lackierenden Oberflächen aufgetragen werden, gelingt es nicht, die eingesetzte Lackmenge vollständig auf die vorgesehenen Oberflächen aufzubringen. Vielmehr vermischt sich ein beträchtlicher Anteil der Lackpartikel mit der die Lackierkabine durchströmenden Luft oder schlägt sich an den Wänden der Lackierkabine nieder. Aus dem Luftstrom werden die Lackpartikel, der sogenannte Lackoverspray, durch geeignete Waschvorrichtungen, beispielsweise durch Venturi-Wäscher mit Wasser ausgewaschen. Das mit Lack vermischte Wasser wird im Umlaufwasserbecken gesammelt und im Kreislauf geführt. Da die Lackpartikel im Umlaufwasser jedoch miteinander und mit Anlageteilen verkleben, werden sie nach herkömmlichen Verfahren durch Zusatz von Entklebungs- und Koaguliermitteln entklebt und koaguliert. Je nach Verfahrensführung sedimentieren die koagulierten Lackpartikel oder sie schwimmen auf dem Umlaufwasser auf. Der so entstehende Lackschlamm kann durch geeignete Räumeinrichtungen vom Boden oder von der Oberfläche des Umlaufwasserbeckens abgeräumt werden. Dieses herkömmliche Verfahren erfordert den Einsatz von anorganischen oder organischen Entklebungs- und Koaguliermitteln, die man beispielsweise auswählen kann aus Schichtsilicaten, Wachsen und organischen Polymeren. Die Einsatzmenge dieser Produkte liegt in der Regel im Bereich von 10 bis 50 Gew.-% bezogen auf den spritzfertigen Lackoverspray. Das Entkleben der Lackpartikel und Ausräumen des Lackschlamms gelingt jedoch in der Regel nicht vollständig, so daß sich Lackschlamm ablagert, der von Zeit zu Zeit mit hohem Arbeitsaufwand manuell entfernt werden muß. Hinzu kommt, daß beim Einsatz anorganischer Koaguliermittel eine zusätzliche Schlammenge entsteht, die zu zusätzlichen Entsorgungskosten führt.

Daher besteht ein Bedarf nach verbesserten Verfahren zur Behandlung des Umlaufwassers in Lackierkabinen, bei denen mit einem reduzierten Chemikalieneinsatz gearbeitet werden kann, bei denen weniger Probleme durch klebende Lackpartikel auftreten und/oder bei denen weniger manueller Aufwand zur Reinigung und Pflege der Lackierkabinen anfällt und die Entsorgungskosten deutlich minimiert werden.

Gegenstand der Erfindung ist in einem ersten Aspekt ein Verfahren zur Behandlung des Umlaufwassers in Lackierkabinen, wobei die Lackpartikel durch Zugabe von Dispergatoren dispergiert werden, die ausgewählt sind aus
a) nichtionischen Tensiden ausgewählt aus Alkoxylaten von Fettsäuren oder Fettaminen mit 7 bis 36, vorzugsweise 10 bis 22 C-Atomen im Fettalkylrest und mit 5 bis 100, vorzugsweise 10 bis 80 Alkylenoxid-einheiten,
b) anionischen Tensiden, wobei in diesem Fall dem Umlaufwasser keine Polyasparaginsäure zusätzlich zugesetzt wird, deren Gesamtkonzentration zwischen 0,01 und 2,0 Gew.-% bezogen auf Umlaufwasser beträgt.

In einem zweiten Aspekt betrifft die Erfindung ein Verfahren zur Behandlung des Umlaufwassers in Lackierkabinen, wobei die Lackpartikel durch Zugabe von Dispergatoren dispergiert werden, die ausgewählt sind aus a) Homo- und Copolymeren von Acrylsäure und/oder Methacrylsäue mit Molmassen im Bereich zwischen 2 500 und 500 000, vorzugsweise im Bereich von 15 000 bis 250 000,
b) nichtionischen Tensiden,
d) anorganischen oder nicht polymeren organischen Komplexbildnern
und wobei man dem Umlaufwasser zusätzlich 0,2 bis 2 Gew-%, bezogen auf das Umlaufwasser, Polyasparaginsäure zusetzt.

Das erfindungsgemäße Verfahren funktioniert dann besonders zuverlässig, wenn durch Zusatz der Dispergatoren zum Umlaufwasser in einer Konzentration zwischen 0,01 und 2,0 Gew.-%, bezogen auf das Umlaufwasser, sichergestellt werden kann, daß die Lackpartikel im Umlaufwasser eine mittels Laserbeugung ermittelbare mittlere Partikelgröße unterhalb von etwa 20 µm aufweisen. Um dies zu erreichen, ist bei Umlaufwasser einer Härte von mindestens 2 °dH (entspricht 0,714 mval/l Erdalkalimetallionen) ein Zusatz geeigneter Dispergatoren erforderlich.

Demnach betrifft die Erfindung in einem verallgemeinerten Aspekt ein Verfahren zur Behandlung des Umlaufwassers in Lackierkabinen, wobei das Umlaufwasser eine Härte von mindestens 2° Deutscher Härte aufweist und wobei die Lackpartikel durch Zugabe von Dispergatoren in einer Konzentration zwischen 0,01 und 2,0 Gew.-% bezogen auf Umlaufwasser so dispergiert werden, daß sie eine mittels Laserbeugung ermittelbare mittlere Partikelgröße unterhalb von 20 µm aufweisen.

Hierbei sind die Dispergatoren vorzugsweise ausgewählt aus: a) Homo- und Copolymeren auf Basis von Maleinsäure, Acrylsäure und/oder Methacrylsäue mit Molmassen im Bereich zwischen 2 500 und 500 000,
b) nichtionischen Tensiden,
d) anorganischen oder nicht polymeren organischen Komplexbildnern
und Mischungen hiervon.

Vorzugsweise beträgt die Gesamtkonzentration der Dispergatoren im erfindungsgemäßen Verfahren 0,02 bis 0,5 Gew.-% bezogen auf Umlaufwasser.

Der Erfolg des erfindungsgemäßen Verfahrens besteht darin, daß die Lackpartikel im Umlaufwasser dispergiert bleiben und sich nicht als schwerentfernbarer Lackschlamm ablagern. Das Umlaufwasser kann also zusammen mit den darin dispergierten Lackpartikeln im Kreise geführt werden, ohne daß Anlagenteile verkleben.

Mit Homo- und Copolymeren auf Basis von Maleinsäure, Acrylsäure und/oder Methacrylsäure sind solche Polymere gemeint, bei denen zumindest ein Teil der Monomeren aus den genannten polymerisierbaren Carbonsäuren besteht. In die Polymere können andere polymerisierbare Monomere mit eingebaut sein. Beispielsweise werden Polymere eingesetzt, die ausschließlich Acrylsäure und/oder Methacrylsäure enthalten. Die Molmasse der Polymere wählt man vorzugsweise im Bereich von 15.000 bis 250.000, insbesondere im Bereich bis 50.000. Die Polymere können als solche oder in Salzform dem Umlaufwasser zugegeben werden. Je nach pH-Wert des Umlaufwassers stellt sich automatisch das Säure-Base-Gleichgewicht zwischen Säure- und Salzform ein.

Als Dispergatoren können im erfindungsgemäßen Verfahren auch nichtionische Tenside eingesetzt werden, die man vorzugsweise auswählt aus Alkoxylaten von Fettsäuren, Fettalkoholen oder Fettaminen mit 7 bis 36, vorzugsweise 10 bis 22 C-Atomen im Fettalkylrest und mit 5 bis 100, vorzugsweise 10 bis 80 Alkylenoxideinheiten. Dabei können diese Alkoxylate endgruppenverschlossen sein, also sogenannte Mischether darstellen. Beispielsweise kann als Endgruppe eine Butylgruppe vorliegen. Als Alkylenoxidgruppen kommen insbesondere Ethylenoxidgruppen oder Kombinationen von Ethylenoxidgruppen und Propylenoxidgruppen in Frage. Beispielsweise kann ein Alkoxylat eines C_{12/14}-Fettalkoholgemischs mit im Mittel 5 Ethylenoxid- und 4 Propylenoxideinheiten im Molekül eingesetzt werden.

Weiterhin können als Dispergatoren anorganische oder nichtpolymere organische Komplexbildner eingesetzt werden. Diese sind vorzugsweise ausgewählt aus i) organischen Carbonsäuren mit zwei bis zehn Heteroatomen, die an Metallionen koordinieren können, insbesondere aus Citronensäure, Weinsäure, Äpfelsäure, Gluconsäure, Nitrilotriessigsäure, Ethylendiamintetraessigsäure, Methylglycindiessigsäure,
ii) organischen Phosphonsäuren, insbesondere aus 1-Hydroxyethan-1,1-diphosphonsäure, Aminotrimethylenphosphonsäure und Phosphonobutantricarbonsäure,
iii) oligomeren oder polymeren anorganischen Phosphaten, insbesondere Na-Triphosphat, Na-Pyrophosphat und Na-Hexametaphosphat.

Als Heteroatome der organischen Komplexbildner, die an Metallionen koordinieren können, kommen insbesondere Sauerstoffatome (Alkohole, Carboxylate) oder Stickstoffatome in Betracht.

Auch hierbei gilt jeweils, daß die Komplexbildner in Form der Säuren oder in Salzform eingesetzt werden können. Je nach pH-Wert des Umlaufwassers wird sich gemäß dem Säure-Base-Gleichgewicht eine Mischung aus Säure- und Salzform einstellen. Die organischen Komplexbildner sollen keine Polymeren darstellen und sich hierdurch von den polymeren Carbonsäuren der Gruppe a) unterscheiden, die ebenfalls komplexierende Eigenschaften haben. Die anorganischen Komplexbildner können jedoch durchaus polymer sein, wie beispielsweise Na-Pyrophosphat.

Dabei können auch Gemische von Vertretern der einzelnen aufgeführten Gruppen von Dispergatoren eingesetzt werden. Insbesondere geeignet sind Mischungen aus Polyacrylaten und Phosphonsäuren sowie Mischungen aus Niotensiden und Phosphonsäuren.

Bei der Verwendung von Dispergatoren ausgewählt aus den Gruppen a), b) und d) kann dem Umlaufwasser zusätzlich 0,2 bis 2 Gew.-%, bezogen auf das Umlaufwasser, Polyasparaginsäure zugesetzt werden. Die Verwendung von Polyasparaginsäure als solcher ist aus der nicht vorveröffentlichten Patentanmeldung PCT/EP 99/00350 bekannt. Gemäß diesem Dokument kann die Polyasparaginsäure zusammen mit anionischen Tensiden eingesetzt werden. Anionische Tenside können im erfindungsgemäßen Verfahren jedoch auch ohne Mitverwendung von Polyasparaginsäure eingesetzt werden. Man wählt die als Dispergatoren einzusetzenden anionischen Tenside vorzugsweise aus aus Seifen, Alkylsulfaten, Alkylsulfonaten, Alkylbenzolsulfonaten, Alkylethersulfaten mit jeweils 7 bis 44, vorzugsweise 8 bis 22 C-Atomen in der Alkylgruppe, und aus sulfonierten Maleinsäureestern.

Den pH-Wert des Umlaufwassers stellt man im erfindungsgemäßen Verfahren vorzugsweise ein auf den Bereich zwischen etwa 5 und etwa 10,5. Dabei können pH-Werte im schwach alkalischen Bereich bevorzugt werden. Insbesondere bei Verwendung von Phosphonsäuren als Dispergatoren erhält man besonders vorteilhafte Ergebnisse, wenn der pH-Wert im Umlaufwasser zwischen etwa 8 und etwa 10 liegt. Bei diesen pH-Werten werden zur Protolyse befähigte Dispergatoren mehrheitlich in Salzform vorliegen, unabhängig davon, in welcher Form man sie in das Umlaufwasser einbringt. Je nach Einsatzform der Dispergatoren kann es erforderlich sein, zum Einstellen des bevorzugten pH-Wertbereiches zusätzlich pH-Korrektoren einzusetzen, beispielsweise Alkalimetallhydroxide.

Weiterhin kann es je nach eingesetztem Lacktyp empfehlenswert sein, dem Umlaufwasser zusätzlich Entschäumer zuzusetzen. Die Verwendung von Entschäumern ist auf dem betroffenen technischen Gebiet allgemein bekannt, da insbesondere bei dem Einsatz von Wasserlacken Schaumprobleme im Umlaufwasser auftreten können.

Das erfindungsgemäße Verfahren ist besonders für Lackieranlagen geeignet, in denen das Umlaufwasser eine hohe Turbulenz aufweist. Durch Strömen des Umlaufwassers wird der dispergierende Effekt der erfindungsgemäß zu verwendenden Dispergatoren erhöht.

Bei der Verwendung der erfindungsgemäßen Dispergatoren kann das Umlaufwasser für eine gewisse Zeit im Umlauf gefahren werden, ohne daß die eingetragenen Lackpartikel entfernt werden müssen. Bei längerem Betrieb der Anlage stellt sich jedoch mit der Zeit eine Konzentration von Lackpartikeln im Umlaufwasser ein, die nicht weiter überschritten werden sollte, um Störungen auszuschließen. In welchem Bereich diese Grenzkonzentration liegt, hängt von der konkreten Ausführungsform der jeweiligen Anlage ab. Daher sieht man im erfindungsgemäßen Verfahren vorzugsweise vor, kontinuierlich oder diskontinuierlich einen Anteil der Lackpartikel aus dem Umlaufwasser zu entfernen. Vorzugsweise geht man hierbei so vor, daß man einen Teil der Lackpartikel durch eine Membranfiltration, vorzugsweise eine Ultrafiltration, vom Umlaufwasser abtrennt. Dabei wird das Permeat der Membranfiltration in das Umlaufwasser zurückgeführt und das Retentat entsorgt. Hierfür kann kontinuierlich oder diskontinuierlich ein Teil des Umlaufwassers über einen By-pass über die Membran gefahren werden.

Die Laserbeugung ist ein Beispiel für eine Meßmethode von Partikelgrößen im Mikrometerbereich, wobei die durch die Teilchen bewirkte Lichtstreuung gemessen wird. Beispielsweise kann hierfür ein Partikelgrößenmeßgerät der Firma Sympatec verwendet werden. Die mittlere Partikelgröße ist als diejenige Partikelgröße definiert, die sich einstellt, wenn man die Partikel durch eine schwache Bewegung der Suspension, beispielsweise durch Rühren in Schwebe hält. Ultraschall, der die Partikel mechanisch zerstört, wird hierbei nicht eingesetzt.

Die vorliegende Erfindung ist in den durch die unabhängigen Ansprüche ausgedrückten Ausführungsformen geeignet, Wasser- und/oder Lösungsmittelbasierte Lacke zu dispergieren.

### Ausführungsbeispiele

Für die Versuche wurde der Wasser-basierte Metallic-Lack Aqua Pearl Base, Sienarot II, der Firma Herberts verwendet. Es wurde jeweils eine solche Menge Testlack in Wasser eingetragen, daß der Lack-Festkörpergehalt bezogen auf die Wassermenge 0,5 Gew.-% betrug. Als Wasser wurde das Leitungswasser des Standorts Düsseldorf-Benrath verwendet, das eine Härte von 18 °dH (entsprechend 6,426 mval/l Erdalkalimetallionen) aufweist.

In einer ersten Versuchsreihe wurde mit dem auf Laser-Beugung basierenden Partikelgrößen-Meßgerät der Firma Sympatec die mittlere Partikelgröße (definiert als 50-%-Wert) gemessen, die sich bei schwachem Rühren unter Verwendung der verschiedenen Dispergatoren einstellte. Die Ergebnisse sind in Tabelle 1 enthalten.

**Tabelle 1:**

| Mittlere Partikelgröße (50-%-Wert) | | |
|---|---|---|
| Beisp. | Dispergator / Menge bezüglich Wasser | 50-%-Wert (µm) |
| Vergl.1 | ohne | 255 |
| Beisp.1 | Kokosamin x 12 EO¹⁾, 0,25 % | 11,8 |
| Beisp.2 | Kokosamin x 12 EO¹⁾, 0,25 % + Polyasparaginsäure, 0,76 % | 11,3 |

| | | |
|---|---|---|
| ¹⁾ EO = Ethylenoxid | | |

Bei der obigen Versuchsreihe zeigte sich, daß die Partikelgröße mit der Stabilität der Lacksuspension korreliert: Bei einer Partikelgröße unterhalb von etwa 20 µm ist auch 30 Minuten nach Herstellung der Dispersion noch keine Sedimentation oder Flotation zu beobachten. An der Glaswand des Prüfgefäßes setzt sich kein Lack ab. Daher wurden weitere Dispergatoren nur noch darauf hin überprüft, ob sie dieses Verhalten zeigen. Beispiele sind in Tabelle 2 enthalten.

**Tabelle 2:**

| Dispergierfähigkeit: Dispersionsstabilität nach 30 Minuten | | | |
|---|---|---|---|
| Beisp. Nr. | Dispergator Menge (Gew.-% bezgl. Wasser) | Dispersion stabil? | Lack an Gefäßwand? |
| Vergl. 2 | ohne | nein (Flotation) | ja |
| Vergl. 3 | Polyasparaginsäure, 0,76 % | nein (Flotation) | nein |
| Beisp. 3 | modifizierte Polyacrylsäure Molmasse 4000, 0,23 % | ja | nein |
| Beisp. 4 | Kokosamin x 12 EO | ja | nein |
| Beisp. 5 | Sulfobernsteinsäurebis-2-ethylhexylester, Na-Salz, 0,38 % | ja | nein |
| Beisp. 6 | Na-Oleat, 0,5 % | ja | nein |

In einer weiteren Versuchsreihe wurde das Sedimentvolumen quantitativ bestimmt. Hierzu wurde das Dispergiermittel in einen Liter Wasser gegeben und 10 Minuten bei 300 U/Minute gerührt. Anschließend wurde der vorstehend beschreibene Testlack in einer solchen Menge zugegeben, daß der Lack-Feststoffgehalt 0,5 Gew.-% bezogen auf das Wasser betrug. Wiederum wurde für 10 Minuten bei 300 U/Minute gerührt. Anschließend wurde die Dispersion in einen Meßtrichter (Imhoff-Trichter) umgefüllt und das Sedimentvolumen in ml nach einer Standzeit von 10 Minuten gemessen. Eine gute Dispergierung zeigt sich darin, daß keinerlei Sediment auftritt. Die Ergebnisse sind in Tabelle 3 enthalten.

**Tabelle 3:**

| Sedimentvolumen | | |
|---|---|---|
| Beisp. Nr. | Dispergator Menge (Gew.-% bezgl. Wasser) | Sedimentvolumen (ml) |
| Vergl. 4 | ohne | 100 |
| Vergl. 5 | Polyasparaginsäure, 0,2 % | 2,5 |
| Beisp. 7 | Polyacrylat (Molmasse 10.000), 0,18 % | 0 |
| Beisp. 8 | Maleinsäure-Olefin-Copolymer (Molmasse 12.000), 0,13% | 0 |
| Beisp. 9 | Polyacrylat (Molmasse 30.000), 0,2 % | 0 |
| Beisp. 10 | Maleinsäure-Acrylsäure-Copolymer (Molmasse70.000), 0,2 % | 0 |
| Beisp. 11 | Kokosamin x 12 EO, 0,1 % | 0 |
| Beisp. 12 | Na-Tripolyphosphat, 0,5 % | 0 |
| Beisp. 13 | Na-Pyrophosphat, 0,5 % | 0 |
| Beisp. 14 | Na-Hexametaphosphat, 0,5 % | 0 |
| Beisp. 15 | Citronensäure, 0,5 % | 0 |
| Beisp. 16 | 1-Hydroxyethan-1,1-diphosphonsäure, 0,3 % | 0 |
| Beisp. 17 | Aminotrimethylenphosphonsäure, 0,25 % | 0 |
| Beisp. 18 | Phosphonobutantricarbonsäure, 0,25 % | 0 |
| Beisp. 19 | Nitrilotriessigsäure, 0,2 % | 0 |
| Beisp. 20 | C_{16/18}-Fettalkohol x 25 EO, 0,5 % | 0 |
| Beisp. 21 | C_{16/18}-Fettalkohol x 80 EO, 0,5 % | 0 |
| Beisp. 22 | Cocosamin x 15 EO, 0,5 % | 0 |
| Beisp. 23 | C_{12/14}-Fettalkoholsulfat, 0,18 % | 0 |
| Beisp. 24 | ringgeöffnetes Sojapolyol x 10 EO, 0,5 % | 0 |

## Patentansprüche

1. Verfahren zur Behandlung des Umlaufwassers in Lackierkabinen, wobei die Lackpartikel durch Zugabe von Dispergatoren dispergiert werden, die ausgewählt sind aus
a) nichtionischen Tensiden ausgewählt aus Alkoxylaten von Fettsäuren oder Fettaminen mit 7 bis 36, vorzugsweise 10 bis 22 C-Atomen im Fettalkylrest und mit 5 bis 100, vorzugsweise 10 bis 80 Alkylenoxid-einheiten,
b) anionischen Tensiden, wobei in diesem Fall dem Umlaufwasser keine Polyasparaginsäure zusätzlich zugesetzt wird,
deren Gesamtkonzentration zwischen 0,01 und 2,0 Gew.-% bezogen auf Umlaufwasser beträgt.

2. Verfahren zur Behandlung des Umlaufwassers in Lackierkabinen, wobei die Lackpartikel durch Zugabe von Dispergatoren dispergiert werden, die ausgewählt sind aus
a) Homo- und Copolymeren von Acrylsäure und/oder Methacrylsäue mit Molmassen im Bereich zwischen 2 500 und 500 000, vorzugsweise im Bereich von 15 000 bis 250 000,
b) nichtionischen Tensiden,
d) anorganischen oder nicht polymeren organischen Komplexbildnern und wobei man dem Umlaufwasser zusätzlich 0,2 bis 2 Gew-%, bezogen auf das Umlaufwasser, Polyasparaginsäure zusetzt.

3. Verfahren nach Anspruch 1, **dadurch gekennzeichnet, daß** die Dispergatoren anionische Tenside sind, die ausgewählt sind aus Seifen, Alkylsulfaten, Alkylsulfonaten, Alkylbenzolsulfonaten, Alkylethersulfaten mit jeweils 7 bis 44, vorzugsweise 8 bis 22 C-Atomen in der Alkylgruppe, und aus sulfonierten Maleinsäureestern.

4. Verfahren nach einem oder mehreren der Ansprüche 1 bis 3, **dadurch gekennzeichnet, daß** die Lackpartikel durch eine Membranfiltration vom Umlaufwasser abgetrennt werden.

5. Verfahren zur Behandlung des Umlaufwassers in Lackierkabinen, wobei das Umlaufwasser eine Härte von mindestens 2° Deutscher Härte aufweist und wobei die Lackpartikel durch Zugabe von Dispergatoren in einer Konzentration zwischen 0,01 und 2,0 Gew.-% bezogen auf Umlaufwasser so dispergiert werden, daß sie eine mittels Laserbeugung ermittelbare mittlere Partikelgröße unterhalb von 20 µm aufweisen.

6. Verfahren nach Anspruch 5, **dadurch gekennzeichnet, daß** die Dispergatoren ausgewählt sind aus
a) Homo- und Copolymeren auf Basis von Maleinsäure, Acrylsäure und/oder Methacrylsäue mit Molmassen im Bereich zwischen 2 500 und 500 000,
b) nichtionischen Tensiden,
d) anorganischen oder nicht polymeren organischen Komplexbildnern und Mischungen hiervon.

7. Verfahren nach Anspruch 5, **dadurch gekennzeichnet, daß** die Dispergatoren nichtionische Tenside sind, ausgewählt aus Alkoxylaten von Fettsäuren, Fettalkoholen oder Fettaminen mit 7 bis 36, vorzugsweise 10 bis 22 C-Atomen im Fettalkylrest und mit 5 bis 100, vorzugsweise 10 bis 80 Alkylenoxideinheiten.

8. Verfahren nach Anspruch 5, **dadurch gekennzeichnet, daß** die Dispergatoren anorganische oder nicht polymere organische Komplexbildner sind, ausgewählt aus
i) organischen Carbonsäuren mit zwei bis zehn Heteroatomen, die an Metallionen koordinieren können, insbesondere aus Citronensäure, Weinsäure, Äpfelsäure, Gluconsäure, Nitrilotriessigsäure, Ethylendiamintetraessigsäure, Methylglycindiessigsäure,
ii) organischen Phosphonsäuren, insbesondere aus 1-Hydroxyethan-1,1-diphosphonsäure, Aminotrimethylenphosphonsäure und Phosphonobutantricarbonsäure,
iii) oligomeren oder polymeren anorganischen Phosphaten, insbesondere Na-Triphosphat, Na-Pyrophosphat und Na-Hexametaphosphat.

9. Verfahren nach einem oder mehreren der Ansprüche 5 bis 8, **dadurch gekennzeichnet, daß** man Dispergatoren ausgewählt aus
a) Homo- und Copolymeren von Acrylsäure und/oder Methacrylsäure mit Molmassen im Bereich zwischen 2 500 und 500 000, vorzugsweise im Bereich von 15 000 bis 250 000,
b) nichtionischen Tensiden,
d) anorganischen oder nicht polymeren organischen Komplexbildnern verwendet und dem Umlaufwasser zusätzlich 0,2 bis 2 Gew-%, bezogen auf das Umlaufwasser, Polyasparaginsäure zusetzt.

10. Verfahren nach Anspruch 5, **dadurch gekennzeichnet, daß** die Dispergatoren ausgewählt sind aus
c) anionischen Tensiden
und daß dem Umlaufwasser keine Polyasparaginsäure zugesetzt wird.

11. Verfahren nach Anspruch 10, **dadurch gekennzeichnet, daß** die anionischen Tenside ausgewählt sind aus Seifen, Alkylsulfaten, Alkylsulfonaten Alkylbenzolsulfonaten, Alkylethersulfaten mit jeweils 7 bis 44, vorzugsweise 8 bis 22 C-Atomen in der Alkylgruppe, und aus sulfonierten Maleinsäureestern.

12. Verfahren nach einem oder mehreren der Ansprüche 5 bis 11, **dadurch gekennzeichnet, daß** die Lackpartikel durch eine Membranfiltration vom Umlaufwasser abgetrennt werden.

## Claims

1. A process for treating the circulating water in painting booths, the paint particles being dispersed by addition of dispersants selected from
a) nonionic surfactants selected from alkoxylates of fatty acids or fatty amines containing 7 to 36 and preferably 10 to 22 carbon atoms in the fatty alkyl group and 5 to 100 and preferably 10 to 80 alkylene oxide units,
b) anionic surfactants, in which case no polyaspartic acid is additionally introduced into the circulating water,
in a total concentration of 0.01 to 2.0% by weight, based on circulating water.

2. A process for treating the circulating water in painting booths, the paint particles being dispersed by addition of dispersants selected from
a) homo- and copolymers of acrylic acid and/or methacrylic acid with molecular weights in the range from 2,500 to 500,000 and preferably in the range from 15,000 to 250,000,
b) nonionic surfactants,
d) inorganic or nonpolymeric organic complexing agents,
0.2 to 2% by weight, based on the circulating water, of polyaspartic acid additionally being added to the circulating water.

3. A process as claimed in claim 1, **characterized in that** the dispersants are anionic surfactants selected from soaps, alkyl sulfates, alkyl sulfonates, alkyl benzenesulfonates, alkyl ether sulfates containing 7 to 44 and preferably 8 to 22 carbon atoms in the alkyl group and from sulfonated maleic acid esters.

4. A process as claimed in one or more of claims 1 to 3, **characterized in that** the paint particles are removed from the circulating water by membrane filtration.

5. A process for treating the circulating water in painting booths, the circulating water having a hardness of at least 2° German hardness and the paint particles being so dispersed by addition of dispersants in a concentration of 0.01 to 2.0% by weight, based on circulating water, that they have a mean particle size, as determined by laser diffraction, below 20 µm.

6. A process as claimed in claim 5, **characterized in that** the dispersants are selected from
a) homo- and copolymers based on maleic acid, acrylic acid and/or methacrylic acid with molecular weights in the range from 2,500 to 500,000,
b) nonionic surfactants,
d) inorganic or nonpolymeric organic complexing agents and mixtures thereof.

7. A process as claimed in claim 5, **characterized in that** the dispersants are nonionic surfactants selected from alkoxylates of fatty acids, fatty alcohols or fatty amines containing 7 to 36 and preferably 10 to 22 carbon atoms in the fatty alkyl group and 5 to 100 and preferably 10 to 80 alkylene oxide units.

8. A process as claimed in claim 5, **characterized in that** the dispersants are inorganic or nonpolymeric organic complexing agents selected from
i) organic carboxylic acids containing two to ten hetero atoms capable of co-ordination to metal ions, more particularly from citric acid, tartaric acid, malic acid, gluconic acid, nitrilotriacetic acid, ethylenediamine tetraacetic acid, methylglycine diacetic acid,
ii) organic phosphonic acids, more particularly from 1-hydroxyethane-1,1-diphosphonic acid, aminotrimethylene phosphonic acid and phosphonobutane tricarboxylic acid,
iii) oligomeric or polymeric inorganic phosphates, more particularly Na triphosphate, Na pyrophosphate and Na hexametaphosphate.

9. A process as claimed in one or more of claims 5 to 8, **characterized in that** dispersants selected from
a) homo- and copolymers of acrylic acid and/or methacrylic acid with molecular weights in the range from 2,500 to 500,000 and preferably in the range from 15,000 to 250,000,
b) nonionic surfactants,
d) inorganic or nonpolymeric organic complexing agents
are used and 0.2 to 2% by weight, based on the circulating water, of polyaspartic acid is additionally added to the circulating water.

10. A process as claimed in claim 5, **characterized in that** the dispersants are selected from
c) anionic surfactants
and **in that** no polyaspartic acid is added to the circulating water.

11. A process as claimed in claim 10, **characterized in that** the anionic surfactants are selected from soaps, alkyl sulfates, alkyl sulfonates, alkyl benzenesulfonates, alkyl ether sulfates containing 7 to 44 and preferably 8 to 22 carbon atoms in the alkyl group and from sulfonated maleic acid esters.

12. A process as claimed in one or more of claims 5 to 11, **characterized in that** the paint particles are removed from the circulating water by membrane filtration.

## Revendications

1. Procédé de traitement de l'eau de circulation dans des cabines de mise en peinture, les particules de peinture étant dispersées au moyen de l'ajout de dispersants, qui sont choisis parmi
a) les tensio-actifs non ioniques choisis parmi les alcoxylates d'acides gras ou d'amines grasses, ayant de 7 à 36, de préférence de 10 à 22 atomes de C, dans le résidu alkyle gras, et ayant 5 à 100, de préférence de 10 à 80 unités d'oxyde d'alkylène,
b) les tensio-actifs anioniques, dans ce cas un poly(acide aspartique) n'étant pas ajouté en plus à l'eau de circulation,
dont la concentration totale est comprise entre 0,01 et 2,0% en poids, par rapport à l'eau de circulation.

2. Procédé de traitement de l'eau de circulation dans des cabines de mise en peinture, les particules de peinture étant dispersées au moyen de l'ajout de dispersants, qui sont choisis parmi
a) les homo- et co-polymères de l'acide acrylique et/ou de l'acide (méth)acrylique, avec des masses molaires dans la plage comprise entre 2 500 et 500 000, de préférence dans la plage de 15 000 à 250 000,
b) les tensio-actifs non ioniques,
d) les complexants inorganiques ou organiques non polymères et du poly(acide aspartique) étant ajouté en plus à l'eau de circulation à raison de 0,2 à 2% en poids par rapport à l'eau de circulation.

3. Procédé selon la revendication 1, **caractérisé en ce que** les dispersants sont des tensio-actifs anioniques qui sont choisis parmi les savons, les sulfates d'alkyle, les sulfonates d'alkyle, les sulfonates d'alkylbenzène, les éthersulfates d'alkyle ayant respectivement 7 à 44, de préférence 8 à 22 atomes de C dans le groupe alkyle, et parmi les esters sulfonés de l'acide maléique.

4. Procédé selon l'une ou plusieurs des revendications 1 à 3, **caractérisé en ce que** les particules de peinture sont séparées de l'eau de circulation, au moyen d'une filtration sur membrane.

5. Procédé de traitement de l'eau de circulation dans des cabines de mise en peinture, l'eau de circulation présentant une dureté d'au moins 2° de dureté allemande, et les particules de peinture étant dispersées au moyen de l'ajout de dispersants en une concentration comprise entre 0,01 et 2,0% en poids, par rapport à l'eau de circulation, de sorte qu'elles présentent une taille de particule moyenne inférieure à 20 µm que l'on peut déterminer au moyen d'une diffraction laser.

6. Procédé selon la revendication 5, **caractérisé en ce que** les dispersants sont choisis parmi
a) les homo- et co-polymères à base d'acide maléique, d'acide acrylique et/ou d'acide (méth)acrylique, ayant des masses molaires dans la plage comprise entre 2 500 et 500 000,
b) les tensio-actifs non ioniques,
d) les complexants inorganiques ou organiques non polymères, et leurs mélanges.

7. Procédé selon la revendication 5, **caractérisé en ce que** les dispersants sont des tensio-actifs non ioniques, choisis parmi les alcoxylates d'acides gras, d'alcools gras ou d'amines grasses, ayant 7 à 36, de préférence 10 à 22 atomes de C dans le résidu alkyle gras, et ayant 5 à 100, de préférence 10 à 80 unités d'oxyde d'alkylène.

8. Procédé selon la revendication 5, **caractérisé en ce que** les dispersants sont des complexants inorganiques ou organiques non polymères, choisis parmi
i) les acides carboxyliques organiques ayant de deux à dix hétéroatomes, qui peuvent être en coordination sur des ions métalliques, en particulier l'acide citrique, l'acide tartrique, l'acide malique, l'acide gluconique, l'acide nitrilotriacétique, l'acide éthylènediamine-tétraacétique, l'acide méthylglycine-diacétique,
ii) les acides phosphoniques organiques, en particulier l'acide 1-hydroxyéthane-1,1-diphosphonique, l'acide aminotriméthylène-phosphonique et l'acide phosphonobutane-tricarboxylique,
iii) les phosphates inorganiques oligomères ou polymères, en particulier le triphosphate de Na, le pyrophosphate de Na, et l'hexamétaphosphate de Na.

9. Procédé selon l'une ou plusieurs des revendications 5 à 8, **caractérisé en ce que** l'on utilise des dispersants choisis parmi
a) les homo- et co-polymères de l'acide acrylique et/ou de l'acide (méth)acrylique, avec des masses molaires dans la plage comprise entre 2 500 et 500 000, de préférence dans la plage de 15 000 à 250 000,
b) les tensio-actifs non ioniques,
d) des complexants inorganiques ou organiques non polymères, et que l'on ajoute en plus un poly(acide aspartique) à l'eau de circulation, à raison de 0,2 à 2% en poids, par rapport à l'eau de circulation.

10. Procédé selon la revendication 5, **caractérisé en ce que** les dispersants sont choisis parmi
c) les tensio-actifs anioniques
et **en ce que** l'on n'ajoute pas de poly(acide aspartique) à l'eau de circulation.

11. Procédé selon la revendication 10, **caractérisé en ce que** les tensio-actifs anioniques sont choisis parmi les savons, les sulfates d'alkyle, les sulfonates d'alkyle, les sulfonates d'alkylbenzène, les éthersulfates d'alkyle, avec respectivement 7 à 44, de préférence 8 à 22 atomes de C dans le groupe alkyle, et parmi les esters sulfonés de l'acide maléique.

12. Procédé selon l'une ou plusieurs des revendications 5 à 11, **caractérisé en ce que**, les particules de peinture sont séparées au moyen d'une filtration sur membrane d'avec l'eau de circulation.
